# EUROPEAN PATENT APPLICATION

(11) **EP 2 361 819 A2**
(43) Date of publication of application: **31.08.2011**
(21) Application number: 11001226.7
(22) Date of filing: 15.02.2011
(51) Int. Cl.: B62D 5/04

(54) **Relay welding detecting device**

(30) Priority: 19.02.2010 JP 2010035044
(71) Applicant: Keihin Corporation, Shinjuku-ku, Tokyo (JP)
(72) Inventor: Ikegami, Yusuke, Shioya-gun Tochigi-ken (JP); Katagata, Masahiro, Shioya-gun Tochigi-ken (JP)
(74) Representative: Eisenführ, Speiser & Partner

(57) **Abstract**

A relay welding detecting device detects welding of a relay (3) interposed between a motor driving circuit (6c) for driving an in-vehicle motor (4) and a battery (1). The relay welding detecting device includes a control determination unit that outputs a motor control signal to the motor driving circuit (6c) in a state where the relay (3) is controlled to be in an OFF state, and determines whether or not the welding of the relay (3) occurs based on a rotating position signal indicating a rotating position of the in-vehicle motor (4).

## Description

### BACKGROUND OF THE INVENTION

### Field of the Invention

The present invention relates to a relay welding detecting device.

### Description of Related Art

Conventionally, as a configuration of an in-vehicle motor control system that controls an in-vehicle motor such as an electric power steering-auxiliary motor, a throttle control motor, or the like, a configuration in which a motor driving circuit for providing a motor driving signal to the in-vehicle motor and a battery are connected to each other via a relay, and the relay is switched to an ON state when controlling the in-vehicle motor to thereby supply a power supply voltage to the motor driving circuit has been disclosed.

In the in-vehicle motor control system, there is a case where a contact voltage on the load side of the relay is measured when starting the system, and welding (fusion adhesion) of a relay contact is detected based on the measured result.

A smoothing capacitor for absorbing a ripple component included in a motor current is provided in the motor driving circuit. When measuring the contact voltage of the relay in a state where the smoothing capacitor is charged up, an inter-terminal voltage (corresponding to battery voltage) of the smoothing capacitor is measured regardless of whether the relay is normal (being in an OFF state), and thereby an error in detection of the relay welding may occur.

Accordingly, as a technique for preventing the error in the detection of the relay welding, Japanese Unexamined Patent Application, First Publication No. 2002-153086 having a configuration in which a discharge control unit for discharging electric charges charged in the smoothing capacitor is provided before measuring the contact voltage of the relay has been disclosed.

In Japanese Unexamined Patent Application, First Publication No. 2002-153086, the discharge control unit for discharging the electric charges charged in the smoothing capacitor as well as a relay contact voltage-detecting unit for measuring the contact voltage of the relay are required to be provided, thereby causing an increase in costs.

### SUMMARY OF THE INVENTION

The present invention is contrived in view of these problems, and an object of the present invention is to provide a relay welding detecting device in which low costs and accuracy in relay welding detection are simultaneously realized.

The present invention adopts the following configuration in order to achieve the above object.
(1) According to an aspect of the present invention, a relay welding detecting device is provided that detects welding of a relay (3) interposed between a motor driving circuit (6c) for driving an in-vehicle motor (4) and a battery (1). The relay welding detecting device includes a control determination unit that outputs a motor control signal to the motor driving circuit (6c) in a state where the relay (3) is controlled to be in an OFF state, and determines whether or not the welding of the relay (3) occurs based on a rotating position signal indicating a rotating position of the in-vehicle motor (4).
(2) In the relay welding detecting device according to (1), the control determination unit may obtain an amount of time variation in the rotating position of the in-vehicle motor (4) based on the rotating position signal, and determine whether or not the welding of the relay (3) occurs based on the amount of time variation.
(3) In the relay welding detecting device according to (2), the control determination unit may compare each of the amounts of time variation having been time-sequentially obtained with a set value, and determine that the welding of the relay (3) occurs when the number of times that the amount of time variation is larger than the set value reaches a predetermined number of times.
(4) In the relay welding detecting device according to (2), the control determination unit may compare the amount of time variation with the set value, and determine that the welding of the relay (3) occurs when the amount of time variation is larger than the set value.

According to the present invention, the control determination unit outputs the motor control signal to the motor driving circuit in a state where the relay is controlled to be in an OFF state, and determines whether or not welding of the relay has occurred based on the rotating position signal indicating the rotating position of the in-vehicle motor. Here, since the in-vehicle motor is not rotated when the relay is normal (nonoccurrence of welding), the rotating position of the in-vehicle motor is not to be changed. On the other hand, when the relay is abnormal (occurrence of welding), the in-vehicle motor is rotated, whereby the rotating position of the in-vehicle motor is to be changed.

Consequently, according to the present invention, since the welding of the relay is detected from the rotating position of the in-vehicle motor without measuring the contact voltage of the relay, unlike the conventional techniques, it is possible to accurately detect the welding of the relay while not being affected by the inter-terminal voltage of the smoothing capacitor. In addition, according to the present invention, since the relay contact voltage-detecting unit and the discharge control unit of the smoothing capacitor are not required to be provided, unlike the conventional technique, costs can be reduced.

Further, an encoder for outputting the rotating position signal indicating the rotating position of the in-vehicle motor and a rotating position sensor such as an angle sensor and the like can be generally connected to the rotation shaft of the in-vehicle motor. According to the present invention, since the rotating position signal being output from the existing rotating position sensor can be used, the cost of the relay welding detecting device can be reduced.

### BRIEF DESCRIPTION OF THE DRAWINGS

FIG 1 is a schematic view illustrating a configuration of an in-vehicle motor control system including a relay welding detecting device (Electronic Control Unit 6 (ECU)) according to an embodiment of the present invention.
FIG 2 is a flowchart illustrating a relay welding detecting process performed by a CPU 6h mounted in the ECU 6.
FIG 3 is a timing chart illustrating a temporal correspondence relation among a voltage V_{IGP} of a second terminal 2b of an ignition switch 2, a reset signal, a relay contact voltage V_{RLY}, a motor operation start signal, and a rotating position of the in-vehicle motor 4.

### DETAILED DESCRIPTION OF THE INVENTION

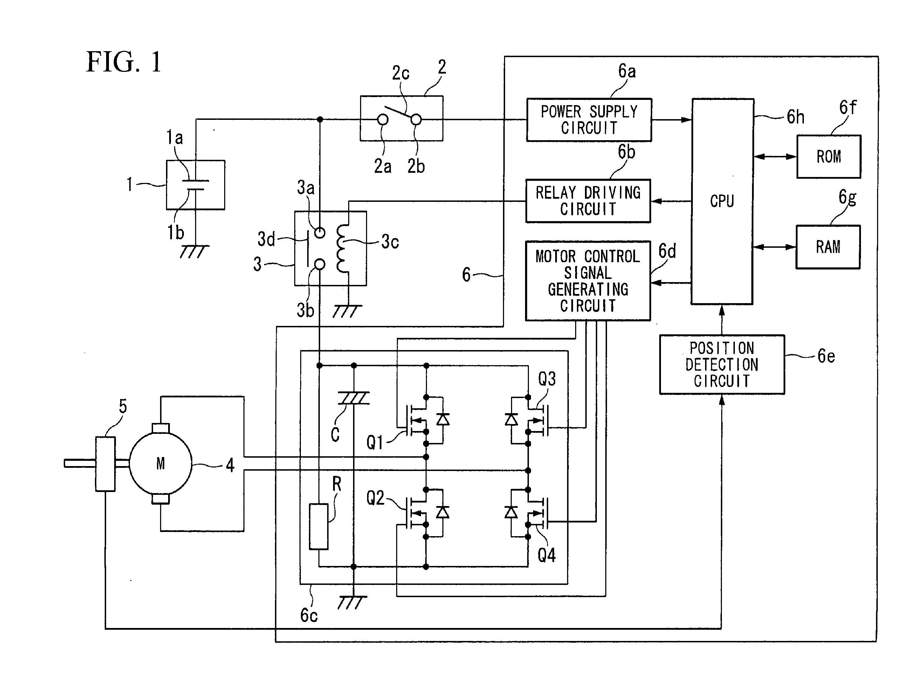

Hereinafter, an embodiment of the present invention will be described in detail with reference to drawings. Further, hereinafter, as a relay welding detecting device according to the embodiment of the present invention, an Electronic Control Unit (ECU) that controls overall operations of an in-vehicle motor control system will be described. FIG 1 is a schematic view illustrating a configuration of an in-vehicle motor control system according to the embodiment of the present invention. As illustrated in FIG 1, the in-vehicle motor control system according to the embodiment of the present invention includes a battery 1, an ignition switch 2, a relay 3, an in-vehicle motor 4, a rotating position sensor 5, and an ECU 6.

The battery 1 is a direct current (DC) power supply that supplies a DC voltage to the ECU 6. The battery 1 includes a positive electrode terminal 1a that is connected to a first terminal 2a of the ignition switch 2 and to a power supply side contact point 3a of the relay 3, and a negative electrode terminal 1b that is grounded. The ignition switch 2 is a switch that can be switched between an ON state and an OFF state by a manual operation. The ignition switch 2 includes the first terminal 2a connected to the positive electrode terminal 1a of the battery 1 and to the power supply side contract point 3 a of the relay 3, a second terminal 2b connected to the ECU 6 (specifically, power supply circuit 6a), and a movable connection piece 2c that can switch connection and disconnection between both terminals (the first terminal 2a and the second terminal 2b) in response to the manual operation.

The relay 3 is an electromagnetic relay in which ON and OFF are controlled by a relay driving signal inputted from the ECU 6 (specifically, a relay driving circuit 6b). The relay 3 includes the power supply side contact point 3a, a load side contact point 3b, a relay coil 3c, and a movable iron piece 3d. Here, the power supply side contact point 3a is connected to the positive electrode terminal 1a of the battery 1 and to the first terminal 2a of the ignition switch 2, and the load side contact point 3b is connected to the ECU 6 (specifically, the motor driving circuit 6c). In addition, one end of the relay coil 3c is connected to the ECU 6 (specifically, the relay driving circuit 6b), and the other end thereof is grounded. Further, the movable iron piece 3d is movable by electromagnetic force generated such that the relay driving signal is inputted to the relay coil 3c, thereby switching connection and disconnection between both contact points (the power supply side contact point 3a and the load side contact point 3b).

The in-vehicle motor 4 is a motor in which a rotation state is controlled by the motor driving signal supplied from the ECU 6 (specifically, the motor driving circuit 6c). For example, as the in-vehicle motor 4, an electric power steering-auxiliary motor or a throttle control motor may be used.

The rotating position sensor 5 outputs, to the ECU 6 (specifically, a position detection circuit 6e), the rotating position signal (for example, a pulse signal in which a time required for rotating the in-vehicle motor 4 at a predetermined angle is set as its period) indicating the rotating position of the in-vehicle motor 4. For example, as examples of the rotating position sensor 5, an encoder connected to a rotation shaft of the in-vehicle motor 4 or an angle sensor may be given.

The ECU 6 controls a switching operation between ON and OFF of the relay 3 or a rotation state of the in-vehicle motor 4. The ECU 6 includes the power supply circuit 6a, the relay driving circuit 6b, the motor driving circuit 6c, a motor control signal generating circuit 6d, a position detection circuit 6e, a Read Only Memory (ROM) 6f, a Random Access Memory (RAM) 6g, and a Central Processing Unit (CPU) 6h which are respectively mounted therein.

Further, of the above described components, a control determination unit according to the embodiment includes the relay driving circuit 6b, the motor control signal generating circuit 6d, the position detection circuit 6e, the ROM 6f, the RAM 6g, and the CPU 6h.

The power supply circuit 6a lowers a DC voltage supplied from the battery 1 via the ignition switch 2, up to a desired voltage, and supplies, to the relay driving circuit 6b, the motor control signal generating circuit 6d, the position detection circuit 6e, the ROM 6f, the RAM 6g, and the CPU 6h, the DC current obtained after the lowering as the power supply voltage. Further, for the convenience of description, only a power source supply path from the power supply circuit 6a to the CPU 6h is illustrated in FIG 1. Also, the power supply circuit 6a outputs a reset signal for activating the startup while providing the power supply voltage to the CPU 6h.

The relay driving circuit 6b outputs, to the relay coil 3c, the relay driving signal for switching the relay 3 from an OFF state to an ON state in response to a conduction start signal inputted from the CPU 6h, and stops an output of the relay driving signal to the relay coil 3c in response to a conduction end signal inputted from the CPU 6h. The motor driving circuit 6c generates the motor driving signal for rotating the in-vehicle motor 4 in response to a motor control signal inputted from the motor control signal generating circuit 6d, and provides the generated motor driving signal to the in-vehicle motor 4.

According to the embodiment, as an example of the motor driving circuit 6c, an inverter circuit obtained such that four switching elements (for example, Field Effect Transistor (FET)) Q1 to Q4 may be bridge-connected is given. Consequently, the motor driving circuit 6c converts, into an alternating current (AC) voltage, a DC voltage supplied from the battery 1 via the relay 3 by means of switching operations of each of the switching elements Q1 to Q4, and supplies, to the in-vehicle motor 4, the AC voltage as the motor driving signal. The switching operations of each of the switching elements Q1 to Q4 are controlled by the motor control signal (for example, Pulse Width Modulation (PWM) signal) inputted to each of the switching elements Q1 to Q4 from the motor control signal generating circuit 6d.

Further, the motor driving circuit 6c includes a smoothing capacitor C that is connected in parallel to an inverter circuit (bridge circuit) so as to absorb a ripple component included in the motor driving current, and a resistor R that is connected in parallel to the smoothing capacitor C so as to expedite discharging of electric charges charged in the smoothing capacitor C.

The motor control signal generating circuit 6d generates the motor control signal (for example, PWM signal) outputting to the motor driving circuit 6c (switching elements Q1 to Q4) in response to a motor operation start signal inputted from the CPU 6h, outputs the generated motor control signal to each of the switching elements Q1 to Q4, and stops an output of each of the motor control signals in response to a motor operation end signal inputted from the CPU 6h. The position detection circuit 6e analyzes the rotating position of the in-vehicle motor 4 based on the rotating position signal inputted from the rotating position sensor 5, and outputs the analyzed result to the CPU 6h.

The ROM 6f is a nonvolatile memory that stores a control program for performing various functions of the CPU 6h and various setting data in advance. The RAM 6g is a volatile working memory that is used previously for temporal data storage when the CPU 6h performs various processes in accordance with the control program.

The CPU 6h has a function to perform a switching control (output of the conduction start signal or the conduction end signal for the relay driving circuit 6b) between ON and OFF of the relay 3 in accordance with the control program stored in the ROM 6f, a function to perform a control of a rotation state of the in-vehicle motor 4 (output of the motor operation start signal or the motor operation end signal for the motor control signal generating circuit 6d), and a function (relay welding detection function) to determine whether or not welding of the relay 3 has occurred based on the rotating position of the in-vehicle motor 4 obtained from the position detection circuit 6e.

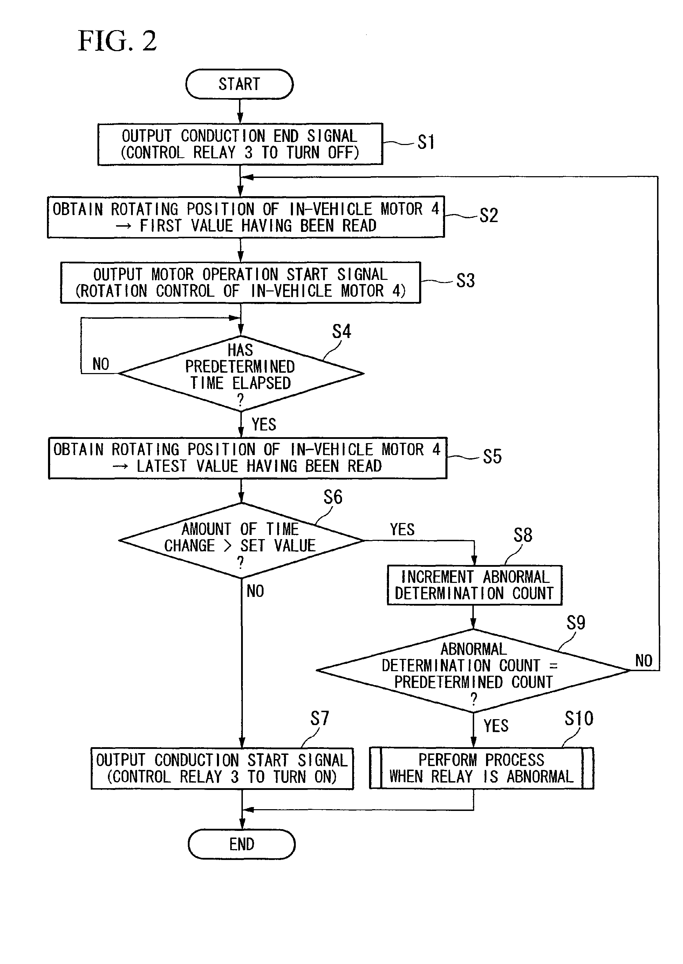

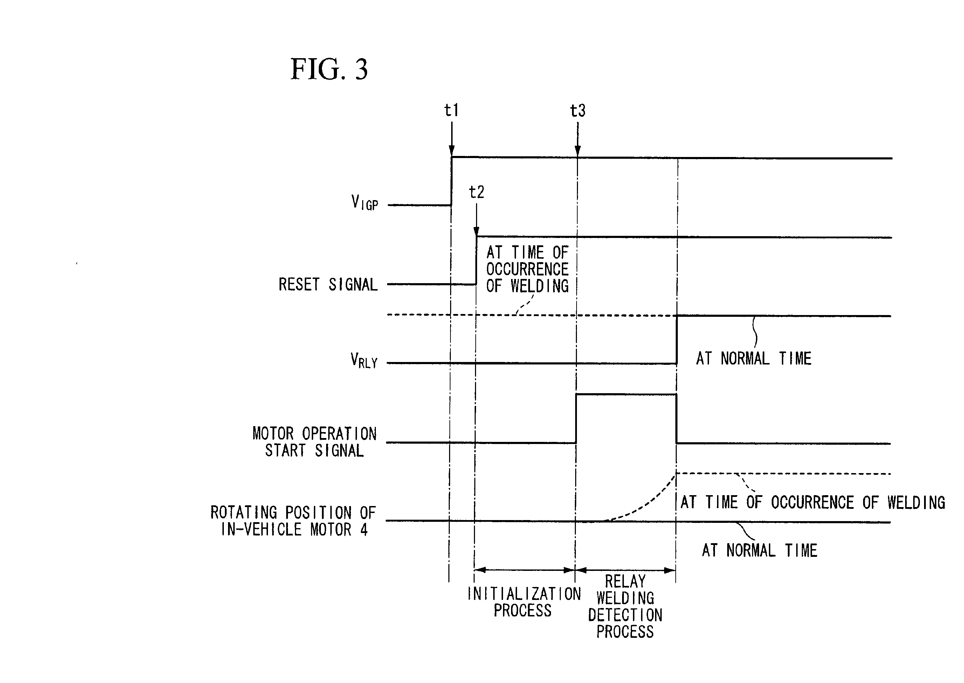

Hereinafter, the relay welding detection function of the CPU 6h will be described in detail with reference to FIGS. 2 and 3. FIG 2 is a flowchart illustrating a relay welding detecting process performed when the CPU 6h starts. FIG 3 is a timing chart illustrating a temporal correspondence relation among a voltage V_{IGP} of the second terminal 2b of the ignition switch 2, a reset signal outputting to the CPU 6h from the power supply circuit 6a, a voltage V_{RLY} of the load side contact point 3b of the relay 3 (hereinafter, referred to as relay contact voltage), the motor operation start signal outputting to the motor control signal generating circuit 6d from the CPU 6h, and the rotating position of the in-vehicle motor 4 obtained from the position detection circuit 6e by the CPU 6h.

Further, broken lines of FIG. 3 indicate the relay contact voltage V_{RLY} when the welding of the relay 3 occurs and a time variation in the rotating position of the in-vehicle motor 4. Also, in the following description, each of times t1, t2, and t3 is used by presuming each of the following operations. That is, at the time t1 of FIG 3, the ignition switch 2 is switched from OFF to ON, so that a DC voltage is supplied to the relay 3 and the ECU 6 from the battery 1. In addition, at the time t2, the power supply voltage and the reset signal may be supplied from the power supply circuit 6a to the CPU 6h. At this time, the CPU 6h starts to perform an initialization process, and the relay welding detection process illustrated in FIG 2 is performed starting from the time t3 after completing the initialization process.

As illustrated in FIG 2, first, the CPU 6h outputs the conduction end signal to the relay driving circuit 6b to thereby control the relay 3 to be in an OFF state (step S1). Subsequently, the CPU 6h obtains the rotating position of the in-vehicle motor 4 from the position detection circuit 6e, and stores, in the RAM 6g, the obtained rotating position as the first read value (Step S2).

Subsequently, the CPU 6h outputs the motor operation start signal to the motor control signal generating circuit 6d (Step 3). Here, since the motor driving signal (that is, an AC voltage) is not supplied from the motor driving circuit 6c to the in-vehicle motor 4 when the relay 3 is normal (nonoccurrence of welding), the in-vehicle motor 4 is not rotated and the rotating position of the in-vehicle motor 4 is not to be changed (see, unbroken lines of FIG 3). On the other hand, since the motor driving signal is supplied from the motor driving circuit 6c to the in-vehicle motor 4 when the relay 3 is abnormal (occurrence of welding), the in-vehicle motor 4 is rotated and the rotating position of the in-vehicle motor 4 is to be changed (see, broken lines of FIG 3).

Accordingly, the CPU 6h determines whether or not a predetermined time has elapsed (Step S4), obtains the rotating position of the in-vehicle motor 4 from the position detection circuit 6e in the case of "Yes" (that is, when the predetermined time has elapsed), and stores, in the RAM 6g, the obtained rotating position as the latest read value (Step 5). Subsequently, the CPU 6h reads, from the RAM 6g, the first read value and the latest read value to thereby calculate an amount of time variation in the rotating position of the in-vehicle motor 4 (=the latest read value―the first read value), and determines whether the calculated amount of time variation (time change) is larger than a set value or not (Step S6). Further, in Step 4, Step S4 is repeatedly performed without advancing to the next process in the case of "No" (that is, when the predetermined time has not elapsed).

In the case of "No" in Step S6, that is, when the amount of time variation at the rotation position is less than or equal to the set value, the CPU 6h determines that the relay 3 is normal (nonoccurrence of welding), and outputs the conduction start signal to the relay driving circuit 6b, and thereby the relay 3 is switched from OFF to ON (Step S7). On the other hand, in the case of "Yes" in Step 6, that is, when the amount of time variation at the rotation position is larger than the set value, the CPU 6h determines that the relay 3 may be abnormal (occurrence of welding), and then increments an abnormal determination count (Step S8) (corresponding to a number of times in which the amount of time variation is determined to be larger than the set value), to thereby determine whether or not the abnormal determination count has reached a predetermined number of times (Step 9).

In the case of "No" in Step S9, that is, when the abnormal determination count has not reached the predetermined number of times, returning to the process of Step S2, the CPU 6h continues to time-sequentially obtain the amount of time variation in the rotating position of the in-vehicle motor 4, and compares each of the amounts of time variation with the set value (amount of time variation for each loop and each amount of time variation) to thereby perform a determination whether or not the relay 3 is abnormal. On the other hand, in the case of "Yes" in Step S9, that is, when the abnormal determination count reaches the predetermined number of times, the CPU 6h confirms that the relay 3 is abnormal (occurrence of welding), and perform a corresponding process when the relay 3 is abnormal, such as, for example, reporting the abnormal condition to a user (lighting of an LED lamp or the like), restricting operations of the in-vehicle motor 4 (stop of the supply of the motor driving signal, transition to a mode returning to a safe operation state, or the like), and the like (Step S10).

Further, during the above described initialization process or after completing Step S7 and Step S10, the abnormal determination count may be initialized.

As described above, according to the embodiment, since the welding of the relay is detected from the rotating position of the in-vehicle motor 4 without measuring the contact voltage of the relay 3, unlike the conventional techniques, it is possible to accurately detect the welding of the relay 3 while not being affected by the inter-terminal voltage of the smoothing capacitor C. In addition, according to the embodiment, since the relay contact voltage-detecting unit and the discharge control unit of the smoothing capacitor C are not required, unlike the conventional techniques, costs can be reduced.

Further, an encoder for outputting the rotating position signal indicating the rotating position of the in-vehicle motor 4 and a rotating position sensor 5 such as an angle sensor and the like may be generally connected to the rotation shaft of the in-vehicle motor 4. According to the embodiment, since the rotating position signal outputting from the existing rotating position sensor 5 is used, the cost of the relay welding detecting device can be reduced.

Further, the present invention is not limited to the above described embodiments, and, for example, the following modified examples may be given.
(1) In the above described embodiment, the in-vehicle motor control system that controls the in-vehicle motor 4 such as the electric power steering-auxiliary motor or the throttle control motor is described. However, the present invention is not limited thereto, and the present invention can be applicable as long as the in-vehicle motor control system controls various motors mounted in a vehicle.
(2) In the above described embodiment, a case where each of the amounts of time variation of the rotating position having been time-sequentially obtained and the set value are compared, and the occurrence of the welding of the relay 3 is determined when the number of times in which the amount of time variation is determined to be larger than the set value has reached the predetermined number of times is illustratively described. However, the present invention is not limited thereto, and it may be confirmed that the welding of the relay 3 occurred when the amount of time variation obtained for the first time is larger than the set value.

Therefore, according to the present invention, there is provided the relay welding detecting device in which low costs and accuracy in relay welding detection are simultaneously realized.

While preferred embodiments of the invention have been described and illustrated above, it should be understood that these are examples of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A relay welding detecting device that detects welding of a relay (3) interposed between a motor driving circuit (6c) for driving an in-vehicle motor (4) and a battery (1), the relay welding detecting device comprising:
a control determination unit that outputs a motor control signal to the motor driving circuit (6c) in a state where the relay (3) is controlled to be in an OFF state, and determines whether or not the welding of the relay (3) occurs based on a rotating position signal indicating a rotating position of the in-vehicle motor (4).

2. The relay welding detecting device according to claim 1, wherein the control determination unit obtains an amount of time variation in the rotating position of the in-vehicle motor (4) based on the rotating position signal, and determines whether or not the welding of the relay (3) occurs based on the amount of time variation.

3. The relay welding detecting device according to claim 2, wherein the control determination unit compares each of the amounts of time variation having been time-sequentially obtained with a set value, and determines that the welding of the relay (3) occurs when a number of times that the amount of time variation is larger than the set value reaches a predetermined number of times.

4. The relay welding detecting device according to claim 2, wherein the control determination unit compares the amount of time variation with the set value, and determines that the welding of the relay (3) occurs when the amount of time variation is larger than the set value.
